# FASCICULE DE BREVET EUROPEEN

(11) **EP 2 472 818 B1**
(45) Date de publication et mention de la délivrance du brevet: **12.06.2013**
(21) Numéro de dépôt: 11190597.2
(22) Date de dépôt: 24.11.2011
(51) Int. Cl.: H04L 29/06, G06F 17/30

(54) **Procédé de traitement de données pour contrôler l'accès à des contenus sur Internet.**
Datenverarbeitungsverfahren zur Kontrolle des Zugriffs auf Internetinhalte
Method for processing data to control access to content on the internet.

(30) Priorité: 28.12.2010 FR 1061290
(43) Date de publication de la demande: 04.07.2012
(73) Titulaire: Olfeo, 75002 Paris (FR)
(72) Inventeur: Souille, M. Alexandre, 75006 PARIS (FR)
(74) Mandataire: Akdogan, Nurhak

(56) Documents cités:
- EP-A1- 1 510 945
- EP-A1- 2 053 530
- WO-A1-2010/101851
- "LOOK AHEAD FILTERING OF INTERNET CONTENT", IBM TECHNICAL DISCLOSURE BULLETIN, INTERNATIONAL BUSINESS MACHINES CORP. (THORNWOOD), US, vol. 40, no. 12, 1 décembre 1997 (1997-12-01), page 143, XP000754118, ISSN: 0018-8689

## Description

La présente invention concerne un procédé de traitement de données numériques pour contrôler l'accès à des contenus sur Internet depuis un réseau local. Elle concerne également un système mettant en oeuvre un tel procédé.

Le domaine de l'invention est le domaine informatique, et plus particulièrement le domaine de la gestion d'accès à des contenus au travers du réseau Internet, par exemple depuis un réseau local comprenant un ou plusieurs utilisateurs. L'invention est plus particulièrement appliquée aux réseaux professionnels, mais peut également être appliquée à des réseaux domestiques.

Actuellement, il existe des procédés de contrôle d'accès à un contenu au travers du réseau Internet depuis un réseau local. Certains de ces procédés offrent la possibilité de réaliser des paramétrages d'accès à Internet en fonction d'un profil ou d'un type d'utilisateurs.

Le paramétrage réalisé grâce à ces procédés est fonction d'une adresse du contenu, par exemple une URL (de l'anglais « Uniform Resource Locator »). Le paramétrage d'adresses comprend en général soit une liste d'adresses autorisées, soit une liste d'adresses interdites pour un utilisateur ou pour un profil d'utilisateur.

Cependant, les procédés de contrôle d'accès actuels présentent des inconvénients qui les rendent inadaptés aux évolutions du réseau Internet.

Dans les procédés actuels, l'autorisation ou l'interdiction d'accès à un site est basé sur le contenu général d'un site. Or, le contenu général d'un site peut changer dans le temps ou ponctuellement. Par exemple, un site, qui initialement est autorisé, peut changer son contenu et publier un ou des éléments de contenus non désirés pour tel ou tel utilisateurs/profils. La seule solution proposée par les procédés actuels est de réaliser une nouvelle classification du site en question, ce qui est une opération lourde car elle nécessite une surveillance du contenu de tous les sites classifiés et une mise à jour de la classification.

Cette situation est encore plus préoccupante, sachant que les contenus sur Internet sont de plus en plus changeants avec la possibilité donnée à chaque utilisateur de publier des contenus sur un nombre croissant de sites/pages Internet.

En outre, il existe des sites ou pages Internet qui comprennent des contenus de catégories diverses, tels que Youtube® ou Facebook®, et pour lesquels les procédés actuels de contrôle d'accès ne proposent pas un contrôle d'accès efficace. En effet, les procédés actuels proposent soit d'interdire complètement l'accès à ces sites, ce qui a pour conséquence que tous les contenus seront interdits y compris les contenus qui sont normalement autorisés, soit d'autoriser complètement l'accès à ces sites ce qui a pour conséquence que tous les contenus seront accessibles y compris les contenus non désirés qui sont normalement interdits.

Le document **D1=**WO 2010/101851 décrit un procédé de filtrage, dans une interface utilisateur d'un réseau social, de contenus à afficher dans une page dudit réseau social associé à un utilisateur en fonction de critères variés, y compris l'émetteur ou le créateur des contenus insérés dans cette page. Le filtrage peut être défini et paramétré par l'utilisateur du réseau social. Ainsi l'utilisateur peut sélectionner, à l'aide de filtres, les contenus à afficher parmi tous les contenus préalablement ajoutés a sa page du réseau social par ses "amis" ou par des algorithmes prédéfinis. Un tel filtrage ne peut être réalisé que par l'utilisateur du réseau social et uniquement sur la page du réseau social qui lui est associée. En effet, dans ce document, le serveur prend en compte un ou plusieurs filtres préalablement renseignés par l'utilisateur, réalise le filtrage des contenus, génère les données d'affichage de la page avec les contenus non filtrés et envoi les données d'affichages de la page à l'appareil informatique de l'utilisateur.

Le document **D2=**EP1510 945 décrit un procédé de contrôle d'accès à un contenu tel qu'une page Internet ou des courriels. Ce procédé comprend une étape analysant le contenu de la page Internet ou du courriel pour y déceler des adresses URL présentes dans la page Internet ou dans le courriel. Pour chaque adresse URL, une catégorisation est alors réalisée. En fonction de la catégorie de l'URL la page Internet (ou le courriel) est soit bloquée soit affichée. La technologie décrite dans ce document ne s'intéresse donc pas a l'identité de la personne ayant inséré l'adresse URL dans la page Internet ou le courriel mais le contenu du site accessible a cette adresse URL.

Le document **D3="**LOOK AHEAD FILTERING OF INTERNET CONTENT", IBM TECHNICAL DISCLOSURE BULLETIN, INTERNATIONAL BUSINESS MACHINES CORP. (THORNWOOD), US, vol. 40, no. 12, 1 décembre 1997 est un résumé de la technologie décrite dans le document **D2**.

Un but de la présente invention est de remédier aux inconvénients précités.

Un autre but de la présente invention est de proposer un procédé et un système de contrôle d'accès permettant de réaliser un contrôle d'accès plus efficace.

Un autre but de la présente invention est de proposer un procédé et système de contrôle d'accès plus personnalisé à chaque site ou page Internet.

Enfin, un autre but de la présente invention est de proposer un procédé et système de contrôle d'accès, permettant de s'adapter aux changements de contenus sur une page Internet.

L'invention propose d'atteindre les buts précités par un procédé de traitement de données pour contrôler l'accès à des contenus au travers du réseau Internet, depuis un réseau, dit local, ledit procédé comprenant les étapes suivantes :
- réception d'une requête d'accès à une page comprenant au moins un élément de contenu ; et
- pour au moins un élément de contenu de ladite page, les étapes suivantes :
   ○ détermination de données d'identification, dites identifiant, d'un émetteur dudit élément de contenu, par analyse de ladite requête et/ou de données d'affichage ladite page chargées en réponse à ladite requête,
   ○ détermination de données de catégorisation, dites catégorie de l'émetteur de l'élément de contenu, par comparaison dudit identifiant de l'émetteur avec au moins une liste d'identifiants, et
   ○ en fonction de ladite catégorie, affichage de ladite page avec ou sans ledit élément de contenu.

La liste d'identifiants peut comprendre une catégorisation des identifiants d'émetteurs d'éléments de contenu soit de manière thématique, par exemple avec des thèmes tels que « sport », « information », « réseaux sociaux », etc., soit de manière décisionnelle, c'est-à-dire « Identifiants autorisés » et/ou « Identifiants Interdits ».

Par « émetteur » d'un élément contenu, on entend l'individu, l'entreprise, l'établissement ou tout autre personne physique ou morale qui a publié ou ajouté cet élément de contenu sur une page Internet ou un site Internet. Lorsqu'une personne publie ou ajoute un élément de contenu sur une page ou un site Internet, elle doit renseigner certains champs tels qu'un champ « nom d'utilisateur » (« login » en anglais). Le nom d'utilisateur peut être un mot ou une adresse de courriel. Très souvent une adresse IP de l'appareil de la personne est également mémorisée en association avec l'élément de contenu.

Par élément de contenu, on entend tous types de contenus qui peuvent être ajoutés ou publiés sur une page ou un site Internet, tels qu'une image, une vidéo, du texte, etc.

Le procédé selon l'invention permet de réaliser un contrôle d'accès à un page internet ou un site Internet non pas en fonction du nom de domaine ou de l'adresse URL mais en fonction d'éléments de contenus réellement publiés sur ladite page ou site au moment de l'accès.

Ainsi, le procédé selon l'invention permet de réaliser un contrôle d'accès plus efficace et directement dépendant des contenus présents sur la page/site Internet. En effet, le contrôle d'accès réalisé par le procédé selon l'invention permet de prendre en compte les changements de contenus dans une page ou un site Internet.

Par ailleurs, le procédé selon l'invention permet de réaliser un contrôle d'accès plus précis, car il permet de discriminer deux contenus présents sur la même page ou site internet.

Le procédé selon l'invention permet également de réaliser un contrôle d'accès plus personnalisé à chaque site ou page Internet car le contrôle d'accès dépend du contenu réel de la page et non d'une classification dépassée de l'adresse URL ou du nom de domaine de la page ou du site.

Enfin, le procédé selon l'invention permet de réaliser un contrôle d'accès qui est rendu encore plus efficace par le fait qu'un même nom d'utilisateur et un même mot de passe peuvent être utilisés par un internaute pour accéder à plusieurs sites différents. Par exemple, de nombreux sites permettent une connexion d'un internaute en utilisant son compte Facebook ®. Ceci permet de faciliter la détection d'un identifiant d'un émetteur de contenus et ainsi d'améliorer le contrôle d'accès à des contenus publiés par cet émetteur sur plusieurs sites ou pages Internet.

Le procédé selon l'invention peut en outre comprendre une étape de détermination de données d'autorisation par comparaison de la catégorie de l'émetteur de l'élément de contenu à au moins une liste de catégories d'identifiants d'émetteurs de contenus autorisées et/ou interdites.

La liste de catégories d'identifiants autorisées/interdites comprend une ou plusieurs catégories d'identifiants. Par exemple, une liste de catégories d'identifiants autorisées peut comprendre les catégories « santé », « information », « éducation » et une liste de catégories d'identifiants interdites peut comprendre les catégories « hacking », « téléchargement », « violence ». Ces listes ne sont pas exhaustives.

Les données d'autorisation pour l'affichage d'un élément de contenu peuvent comprendre une donnée d'autorisation accordée, de type « OK », ou une donnée d'autorisation refusée, de type « NOK ».

Le procédé selon l'invention peut en outre comprendre une détermination d'une donnée d'identification, dite identifiant, de l'utilisateur désirant accéder à la page comprenant l'au moins un élément de contenu. Cette détermination d'une donnée d'identification peut être réalisée en analysant la requête d'accès à ce contenu ou en déterminant l'identifiant de l'appareil à l'origine d'une telle requête. L'identifiant de l'utilisateur peut être par exemple un nom d'utilisateur ou une adresse IP.

Le procédé selon l'invention peut avantageusement comprendre une détermination d'un profil associé à l'utilisateur en fonction de l'identifiant de l'utilisateur.

La détermination d'un profil associé à un utilisateur peut être réalisée en consultant une liste dans laquelle l'identifiant de l'utilisateur est associé à un profil, par exemple une liste associant un identifiant à un profil tel que:
- John → Direction
- Emma → Service Marketing,
- 198.165.10.10 → Service Communication,
- 5E:FF:56:A2:AF:15 → Poste en accès libre.

Cette liste n'est pas exhaustive.

Avantageusement, la liste de catégories d'identifiants d'émetteurs de contenus autorisées/interdites peut être fonction d'un profil prédéterminé. Ainsi, dans l'exemple précédent, les catégories d'identifiants d'émetteurs d'éléments de contenus autorisées ne seront pas les mêmes pour le profil « Direction » et pour le profil « Poste en accès libre ».

Par ailleurs un paramétrage temporel, un paramétrage par quotas temporel et/ou un paramétrage par quotas de volume de données, peut être associé à au moins une catégorie autorisée/interdite pour au moins un profil, rendant cette catégorie autorisée/interdite pendant une tranche horaire, par exemple.

Le procédé selon l'invention peut en outre comprendre une détermination d'une liste d'identifiants d'émetteurs d'éléments de contenus, ladite liste reliant au moins une donnée d'identification d'un émetteur d'un contenu à au moins une catégorie thématique ou décisionnelle.

Le procédé selon l'invention peut en outre comprendre une classification d'un identifiant d'un émetteur d'un élément de contenu dans au moins une catégorie, par recherche et analyse des contenus précédemment émis par cet émetteur.

Les données d'identification d'un émetteur d'un élément de contenu peuvent comprendre un nom d'utilisateur, un numéro IP, ou une adresse de courriel électronique.

L'identifiant d'un émetteur de contenu peut être déterminée de deux manières possibles :
- en analysant la requête d'accès à une page, ou
- en analysant les données d'affichage d'une page, ces données d'affichage étant chargées suite à la réception d'une requête d'accès à la page.

Le procédé selon l'invention peut être appliqué au contrôle parental dans le cadre d'un réseau domestique, et plus particulièrement au contrôle d'accès à des contenus dans le cadre d'un réseau professionnel.

Le procédé selon l'invention peut en outre comprendre un filtrage des contenus émis par un émetteur en fonction du type du contenu, à savoir un contenu vidéo, un contenu image, un contenu texte, etc. Ainsi, il est possible d'interdire l'accès à des contenus vidéos émis par un émetteur de contenu et d'autoriser l'accès à des contenus texte émis par le même émetteur.

Selon un autre aspect de l'invention, il est proposé un système de traitement de données pour contrôler l'accès à des contenus au travers du réseau Internet, depuis un réseau, dit local, ledit système comprenant :
- des moyens pour déterminer une donnée d'identification, dites identifiant, d'un émetteur d'un élément de contenu d'une page par analyse :
   ○ d'une requête d'accès à ladite page et/ou
   ○ de données d'affichage de ladite page chargées suite à la réception de ladite requête,
- des moyens de comparaison dudit identifiant de l'émetteur de l'élément de contenu avec au moins une liste d'identifiants prédéterminée,
- des moyens d'affichage ou non dudit élément de contenu en fonction de ladite comparaison.

Les moyens de comparaison peuvent se trouver sur un appareil informatique agencé à distance du réseau dans lequel se trouve l'utilisateur désirant accéder à la page Internet.

D'autres avantages et caractéristiques apparaîtront à l'examen de la description détaillée d'un mode de réalisation nullement limitatif, et des dessins annexés sur lesquels :
- la figure 1 est une représentation schématique d'une configuration de contrôle d'accès à un contenu ;
- la figure 2 est une représentation schématique d'un système selon l'invention ; et
- la figure 3 est une représentation sous la forme d'un diagramme d'un procédé selon l'invention.

Sur les figures et dans la suite de la description, les éléments communs à plusieurs figures conservent la même référence.

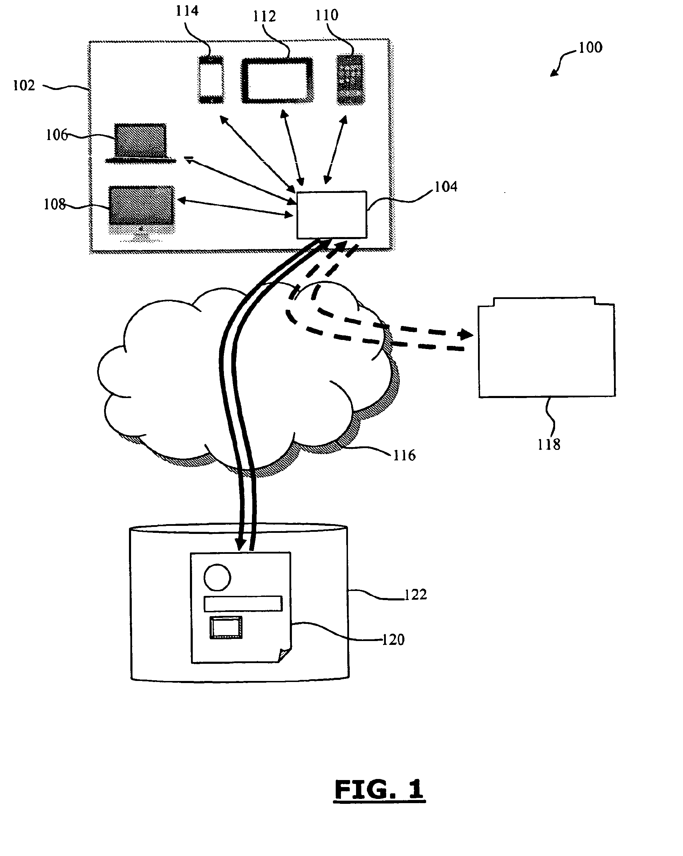

La figure 1 est une représentation schématique d'une configuration 100 de contrôle d'accès à un contenu selon l'invention dans un réseau professionnel.

En référence à la figure 1, l'invention propose de réaliser un contrôle d'accès à des contenus depuis un réseau 102 comprenant:
- un serveur local 104, et
- des appareils utilisateurs 106-114, tels qu'un ordinateur 106, une télévision 108, un Smartphone 110, une tablette multimédia 112 et un lecteur multimédia 114.

Tous les appareils utilisateurs 106-114 accèdent au réseau Internet 116 en passant par le serveur local 104.

Dans le cas d'un réseau domestique ou professionnel le serveur local 104 peut par exemple être, mais n'est pas limitée à, une box opérateur.

Le contrôle d'accès selon l'invention peut mettre en oeuvre un serveur central 118 accessible par le serveur local 104 au travers du réseau Internet 116 et avec lequel le serveur local 104 échange des données numériques au travers du réseau Internet 116 selon un protocole connu ou propriétaire. Les échanges de données sont symbolisés par des flèches.

Dans la configuration représentée sur la figure 1, il est proposé de contrôler l'accès à un contenu 120 se trouvant sur un serveur distant 122 accessible aux appareils utilisateurs 106-114 au travers du réseau Internet 116 en passant par le serveur local 104.

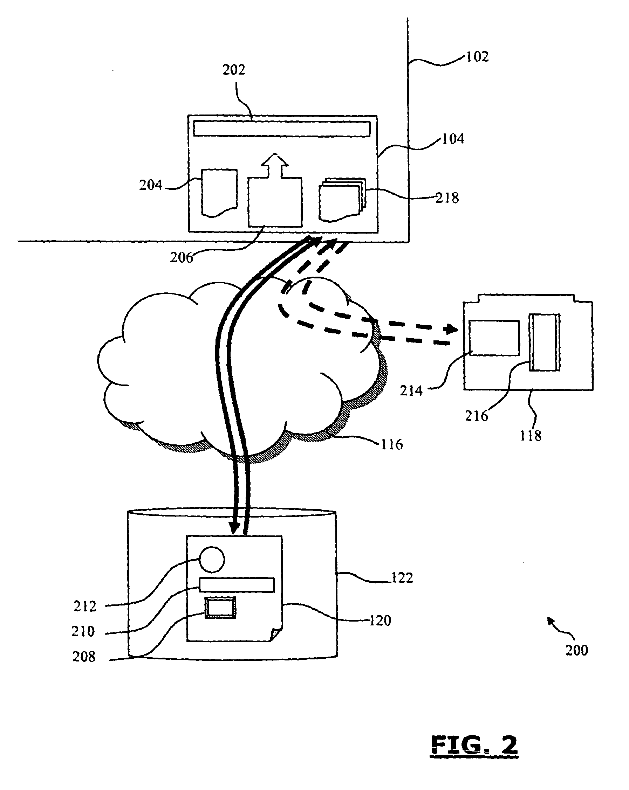

La figure 2 est une représentation schématique d'un premier mode de réalisation 200 d'un système selon l'invention.

Dans ce mode de réalisation, le système 200 comprend un module 202, dit d'analyse, installé dans le serveur 104 et agencé pour réaliser l'analyse d'une requête d'accès à une page Internet 120 et déterminer un identifiant utilisateur associé à l'utilisateur de l'appareil à l'origine de la requête d'accès. Le serveur 104 comprend en outre une liste 204, dite de profils, mémorisée sur le serveur 104, et consultable par le module d'analyse 202 pour déterminer le profil associé à l'utilisateur à l'origine de la requête grâce à l'identifiant de l'utilisateur ou de l'appareil qu'il utilise. La liste de profils 204 associe à chaque identifiant utilisateur un profil, tel que par exemple:
- John → Direction
- Emma → Service Marketing,
- 198.165.10.10 → Service Communication,
- 5E:FF:56:A2:AF:15 → Poste en accès libre..

Le serveur local 104 comprend en outre un module de chargement 206 prévu pour charger les données d'affichage de la page 120 depuis le serveur distant 122.

Les données d'affichage chargées par le module de chargement 206 sont fournies au module d'analyse 202 qui permet de déterminer un identifiant de l'émetteur de chacun des éléments de contenus de la page 120.

Dans l'exemple présent la page Internet 120 comprend trois éléments de contenus 208, 210, 212.

Les identifiants de chacun des contenus 208-212 sont ensuite transmis au serveur central 118.

Le serveur central 118 comprend un module de catégorisation 214 qui détermine la catégorie dans laquelle est classé chacun des émetteurs des éléments de contenus 208-212 en comparant les identifiants de chacun des émetteurs à une liste d'identifiants 216. La catégorie de chacun des émetteurs de contenus est transmise au serveur local 104.

Le serveur local 104 comprend une ou plusieurs listes 218 de catégories autorisées/interdites pour chaque profil d'utilisateurs. Le module d'analyse 202 détermine, pour chacun des éléments de contenus 208-212, si l'émetteur de ce contenu est autorisé ou interdit en fonction du profil de l'utilisateur, de la catégorie de chacun des émetteurs des contenus 208-212 et des listes 218. Pour chacun des contenus 208-212 des données d'autorisation sont donc déterminées par le module d'analyse.

Concrètement, une liste 218 pour le profil « Direction » peut comprendre des catégories d'identifiants d'émetteurs d'éléments de contenus autorisées telles que :
○ Information,
○ Comptabilité,
○ Bourse, et
○ Management; et
   alors qu'une liste 218 pour le profil « Poste en accès libre » autorise les catégories d'identifiants d'émetteurs d'éléments de contenus suivantes:
○ Information, et
○ Réseau sociaux.

Chacune de ces catégories peut être associée à un paramétrage temporel permettant d'autoriser cette catégorie entre telle ou telle tranche horaire.

En fonction des données d'autorisation la page 120 est affichée avec un ou plusieurs éléments de contenus 208-212.

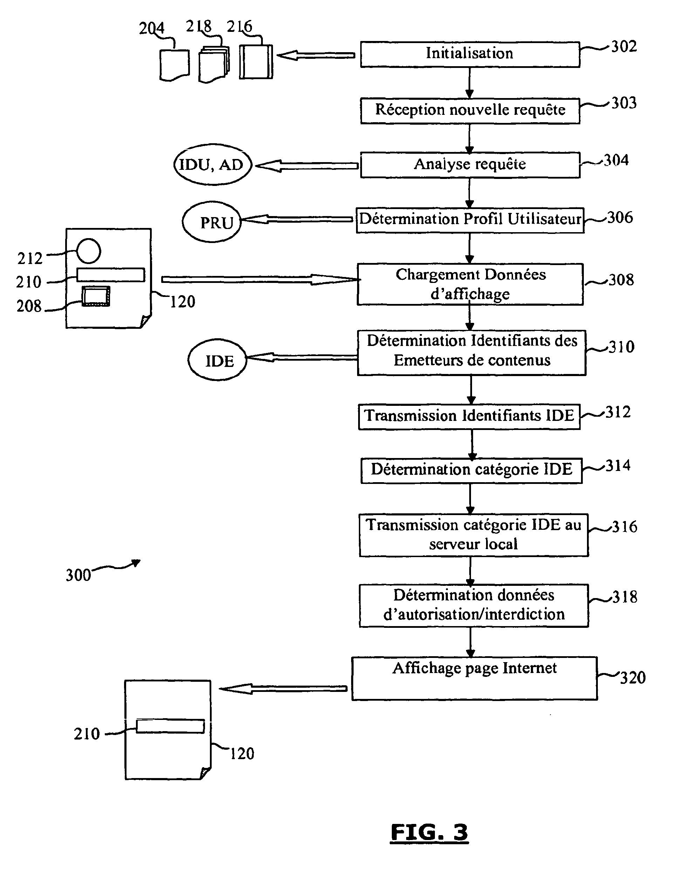

La figure 3 est une représentation sous la forme d'un diagramme d'un exemple de réalisation non limitatif d'un procédé 300 selon l'invention.

Le procédé 300 représenté sur la figure 3 peut être mis en oeuvre dans le système représenté en figures 2 ou dans la configuration 100 de contrôle représentée sur la figure 1.

Le procédé comprend une première étape 302 d'initialisation. La liste de profils 204 associant les identifiants utilisateurs aux profils et les profils 218 comprenant chacun les listes de catégories autorisées/interdites, sont créés lors de cette étape. La liste d'identifiants 216, associant une catégorie thématique à un identifiant d'un émetteur d'éléments de contenus, peut également être créée lors de cette étape ou téléchargée lors de cette étape depuis un autre appareil informatique (non représenté sur les figures 1 et 2). Cette étape 302 n'est réalisée qu'une seule fois.

Les étapes suivantes sont réalisées à chaque réception/détection par le serveur 104 d'une nouvelle requête d'accès à une page Internet émise par un appareil utilisateur 106-114 au sein du réseau local 102.

Après la réception, à l'étape 303, d'une nouvelle requête d'accès à un contenu la requête d'accès est analysée lors d'une étape 304 par le module d'analyse 202 pour déterminer l'identifiant IDU de l'utilisateur et l'adresse AD de la page Internet visée par la requête d'accès.

A l'étape 306, le profil PRU de l'utilisateur de l'appareil à l'origine de la requête est déterminé en consultant la liste de profils 204.

A l'étape 308, les données d'affichage de la page Internet 120 sont chargées depuis l'adresse AD dans le serveur 104 par le module de chargement 206.

A l'étape 310, les données d'affichage de la page 120 sont analysées par le module d'analyse 202 pour déterminer les éléments de contenus 208-212 présents dans la page Internet 120 et les identifiants des émetteurs IDE pour chacun des éléments de contenus 208-212.

A l'étape 312, les identifiants IDE des émetteurs des contenus 208-212 sont transmis au serveur central 118.

Pour chacun des identifiants IDE, une catégorie est déterminée par le module de catégorisation 214 en comparant chaque identifiant IDE de chaque émetteur de chaque contenu 208-212 à la liste d'identifiants 216 lors de l'étape 314.

A l'étape 316, la catégorie de chacun des émetteurs des contenus est transmise au serveur local 102.

Pour chaque contenu 208-212, le module d'analyse 202 détermine des données d'autorisation d'affichage ou non. Pour cela, à l'étape 318, le module d'analyse 202 consulte la liste des catégories autorisées/interdites 218 pour le profil PR déterminé.

En fonction des données d'autorisation pour chaque contenu 208-212, la page Internet 120 est affichée au niveau d'un appareil utilisateur du réseau local 102 sans le ou les contenus pour lesquels les données d'autorisation interdisent l'affichage pour l'utilisateur ou le profil concerné.

Dans l'exemple représenté, sur la figure 3, seule le contenu 210 est autorisé et les contenus 208 et 212 sont interdits pour le profil concerné. La page 120 est donc affichée sans les contenus 208 et 212 mais seulement avec le contenu 210. L'emplacement des contenus 208 et 212 non affichés peut être remplacé par un autre contenu pour un fond blanc par exemple.

Dans un autre mode de réalisation du procédé selon l'invention, les étapes 306 à 318 peuvent être réalisées par le serveur central 118. Dans ce cas, la requête d'accès à la page 120 est directement transmise au serveur central 118 par le serveur local 104 sans aucun traitement. Le serveur central 118 charge les données d'affichage, identifie les différents éléments de contenus présents dans la page 120, détermine les identifiants des émetteurs des éléments de contenus de la page, catégorise chaque identifiant d'émetteur, détermine des données d'autorisation et envoie au serveur local les données d'affichage de la page 120 dans laquelle les éléments de contenus interdits ont été enlevés.

Dans encore un autre mode de réalisation, toutes les étapes du procédé selon l'invention peuvent être réalisée par le serveur local. Dans ce cas le système selon l'invention ne comprend pas de serveur central. Le module de catégorisation ainsi que la liste d'identifiants des émetteurs d'éléments de contenus se trouvent alors sur le serveur local.

Dans les exemples donnés, les modules peuvent être soit des composants électroniques tels que des processeurs ou des calculateurs ou des modules informatiques sous la forme de logiciels ou programmes.

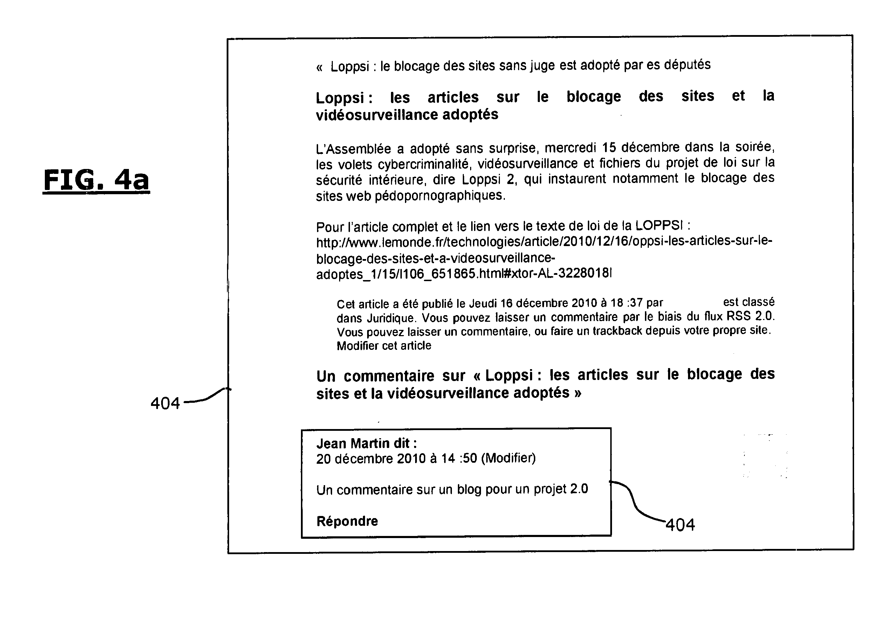

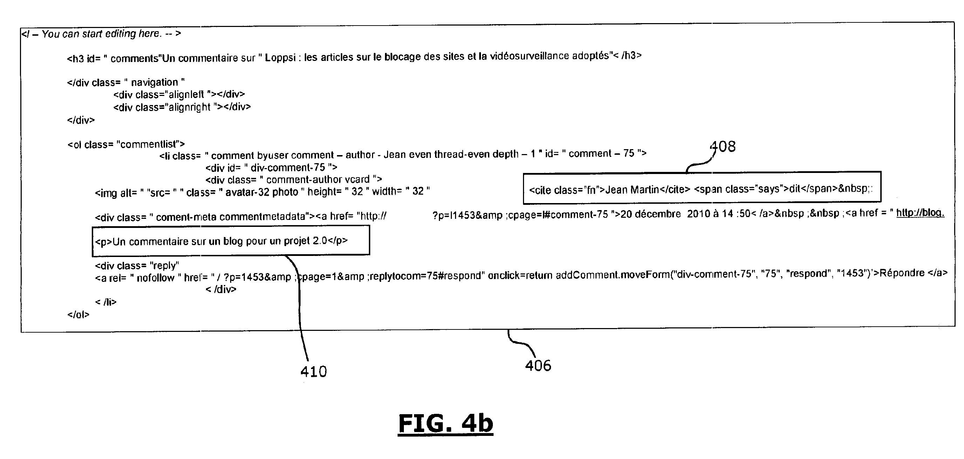

Les figures 4a et 4b donnent un exemple de détermination d'un identifiant d'un émetteur d'un élément de contenu sur une page 402.

La figure 4a donne une vue de la page 402. La page 402 est une page Internet d'un blog d'information. Cette page 402 donne la possibilité à ses lecteurs de réagir à une information en ajoutant des commentaires.

Sur cette page 402 un utilisateur, nommé « Jean Martin » à publié un commentaire au niveau d'une zone 404.

La figure 4b correspond aux données d'affichages de la page et plus précisément le code HTML 406 de la page 402. Le code HTML 406 de la page 402 est analysé de la manière suivante.

Le procédé selon l'invention comprend d'abord une détermination du type du moteur de site en analysant l'entête de la page, par un code de type « /html/head/meta[@name="generator"]». Dans le cas présent il s'agit d'un moteur « WordPress2.7 ».

En fonction du type de moteur de site, le procédé selon l'invention comprend ensuite les étapes suivantes :
- une recherche de commentaires dans le code HTML 406 de la page 402 par un code de type « div[@class='comment-author vcard']/cite » ;
- pour chaque commentaire, une détermination de l'auteur du commentaire: ici il s'agit de « jean martin » ;
- une remontée à la racine du commentaire ;
- une extraction du commentaire : ici « Un commentaire sur un blog ... » ;
- une transmission au module d'autorisation de l'identité du site, de l'identité du commentaire,
- si le module d'autorisation refuse un affichage du commentaire, alors une suppression ou remplacement de la RACINE du commentaire.

Dans les exemples non limitatifs décrits en référence aux figures 1 à 4b, l'identifiant de l'émetteur d'un élément de contenu d'une page est déterminé en analysant les données d'affichage de la page.

Selon l'invention, l'identifiant de l'émetteur d'un élément de contenu d'une page peut également être déterminé en analysant la requête d'accès à cette page. En effet, certains sites, de type Dailymotion ®, permettent d'accéder directement à un élément de contenu vidéo. Dans ce cas, la requête d'accès comprend l'identifiant du contenu vidéo. En analysant cet identifiant de contenu, il est possible de déterminer l'émetteur de ce contenu vidéo et donc de réaliser un contrôle d'accès à ce contenu sans avoir à charger les données d'affichage de la page.

Nous allons maintenant décrire deux exemples de réalisation non limitatifs dans lesquels l'identifiant d'un élément de contenu est déterminé en analysant une requête d'accès à ce contenu.

Selon un premier exemple, l'utilisateur veut accéder à une URL comprenant l'identifiant de l'émetteur du contenu par exemple:
■ *http:*//*www.dailvmotion.com*/*machbroc. ou*
■ *http:llwww.dailymotion.com*/*user*/*machbroc*/*1*

Dans ce cas l'identifiant de l'émetteur de contenue est identifié directement et est « machbroc ».

Selon un deuxième exemple, l'utilisateur veut accéder à un contenu en saisissant la requête:
*http:*//*www.dailymotion.com*/*video*/*xf9s2z test-sur-video-publique lifestyle,* ou
http://www.dailymotion.com/playlist/x1ez6u mrbean all-episodes#videoid=xeoexp

Dans ce cas, la requête est analysée et un identifiant de contenu est déterminé:
*Vidéo numéro: xf9s2z ou*
*Vidéo numéro : xeoexp*

Grâce à cet identifiant de contenu, l'identifiant de l'émetteur est déterminé en utilisant une base des couples Identifiant contenu/Identifiant émetteur préalablement constituée et régulièrement enrichie.

Bien entendu l'invention n'est pas limitée aux exemples qui viennent d'être décrits.

## Revendications

1. Procédé de traitement de données pour contrôler l'accès à des contenus (208-212) au travers du réseau Internet (116), depuis un réseau (102), dit local, ledit procédé comprenant les étapes suivantes :
- réception d'une requête d'accès à une page (120) comprenant au moins un élément de contenu (208-212), et
- pour au moins un élément de contenu (208-212) de ladite page (120), les étapes suivantes :
o détermination (310) de données d'identification (IDE), dites identifiant, d'un émetteur dudit élément de contenu (208-212), par analyse de ladite requête et/ou de données d'affichage de ladite page chargées en réponse à ladite requête,
o détermination (314) de données de catégorisation, dites catégorie de l'émetteur de l'élément de contenu (208-212), par comparaison dudit identifiant de l'émetteur de l'élément de contenu (208-212) avec au moins une liste d'identifiants (216), et
o en fonction de ladite catégorie, affichage de ladite page (120) avec ou sans ledit élément de contenu (208-212).

2. Procédé selon la revendication 1, **caractérisé en ce qu'**il comprend en outre une étape de détermination (318) de données d'autorisation par comparaison de la catégorie de l'émetteur de l'élément de contenu (208-212) à au moins une liste (218) de catégories d'identifiants d'émetteurs d'éléments de contenus autorisées et/ou interdites.

3. Procédé selon l'une quelconque des revendications précédentes, **caractérisé en ce qu'**il comprend une détermination (306) d'une donnée d'identification (IDU), dite identifiant, d'un utilisateur désirant accéder à la page (120) comprenant l'élément de contenu (208-212).

4. Procédé selon la revendication 3, **caractérisé en ce qu'**il comprend une détermination (306) d'un profil (PRU) associé à l'utilisateur en fonction de l'identifiant (IDU) de l'utilisateur.

5. Procédé selon les revendications 2 et 4, **caractérisé en ce que** la liste (218) de catégories d'identifiants autorisées/interdites est fonction d'un profil utilisateur (PRU) prédéterminé.

6. Procédé selon l'une quelconque des revendications précédentes, **caractérisé en ce qu'**il comprend une détermination (302) d'une liste (216) d'identifiants d'émetteurs d'éléments de contenus (208-212), ladite liste (216) reliant au moins un identifiant (IDE) d'un émetteur d'un élément de contenu à au moins une catégorie d'identifiants.

7. Procédé selon la revendication 6, **caractérisé en ce qu'**il comprend une classification (302) d'un identifiant (IDE) d'un émetteur d'un élément de contenu (208-212) dans au moins une catégorie, par recherche et analyse des contenus précédemment émis par cet émetteur.

8. Procédé selon l'une quelconque des revendications précédentes, **caractérisé en ce qu'**un identifiant (IDE, IDU) représente un nom d'utilisateur, un numéro IP, ou une adresse de courriel électronique.

9. Utilisation du procédé selon l'une quelconque des revendications précédentes au contrôle d'accès à des contenus depuis un réseau professionnel.

10. Système (200) de traitement de données pour contrôler l'accès à des contenus (208-212) au travers du réseau Internet (116), depuis un réseau (102), dit local, ledit système (200) comprenant :
- des moyens (202) pour déterminer une donnée d'identification (IDE), dites identifiant, d'un émetteur d'un élément de contenu (208-212) d'une page (120) par analyse d'une requête d'accès à ladite page (120) et/ou de données d'affichage de ladite page,
- des moyens (214) de comparaison dudit identifiant (IDE) dudit émetteur avec au moins une liste (118) d'identifiants prédéterminée,
- des moyens d'affichage ou non dudit élément de contenu en fonction de ladite comparaison.

## Patentansprüche

1. Datenverarbeitungsverfahren zur Kontrolle des Zugriffs auf Inhalte (208-212) über das Internet (116), von einem sogenannten LAN (102) aus, wobei das Verfahren folgende Schritte umfasst:
- Empfang einer Zugriffsanfrage auf eine mindestens ein Inhaltselement (208-212) enthaltende Seite (120), und
- für mindestens ein Inhaltselement (208-212) besagter Seite (120), folgende Schritte:
o Festlegung (310) von Identifizierungsdaten (IDE), dem sogenannten Identifikator, eines Senders des besagten Inhaltselements (208-212) durch Auswertung der Anfrage und/oder von als Antwort zu besagter Anfrage geladenen Anzeigedaten der besagten Seite,
o Festlegung (314) von Klassifizierungsdaten, der sogenannten Klasse des Senders des Inhaltselements (208-212), durch Abgleich des Identifikators des Senders des Inhaltselements (208-212) mit wenigstens einem Identifikatorenverzeichnis (216), und
o je nach der besagten Klasse, Anzeige der besagten Seite (120) mit dem oder ohne das Inhaltselement (208-212).

2. Verfahren nach Anspruch 1, **dadurch gekennzeichnet, dass** es außerdem einen Schritt zur Festlegung (318) von Autorisierungsdaten durch Abgleich der Klasse des Senders des Inhaltselements (208-212) mit wenigstens einem Verzeichnis (218) von autorisierten und/oder gesperrten Klassen von Identifikatoren der Sender von Inhaltselementen umfasst.

3. Verfahren nach einem der vorhergehenden Ansprüche, **dadurch gekennzeichnet, dass** es eine Festlegung (306) einer Identifizierungsdata (IDU), des sogenannten Identifikators, eines Benutzers, der Zugriff auf die Seite (120) mit dem Inhaltselement (208-212) haben will, enthält.

4. Verfahren nach Anspruch 3, **dadurch gekennzeichnet, dass** es eine Festlegung (306) eines mit dem Benutzer verbundenen Profils (PRU) entsprechend dem Identifikator (IDU) des Benutzers umfasst.

5. Verfahren nach den Ansprüchen 2 und 4, **dadurch gekennzeichnet, dass** das Verzeichnis (218) der autorisierten/gesperrten Identifikatorenklassen von einem vorbestimmten Benutzerprofil (PRU) abhängt.

6. Verfahren nach einem der vorhergehenden Ansprüche, **dadurch gekennzeichnet, dass** es eine Festlegung (302) eines Verzeichnisses (216) der Identifikatoren der Sender der Inhaltselemente (208-212) umfasst, wobei dieses Verzeichnis (216) wenigstens einen Identifikator (IDE) eines Senders eines Inhaltselements mit wenigstens einer Identifikatorenklasse verbindet.

7. Verfahren nach Anspruch 6, **dadurch gekennzeichnet, dass** es eine Zuordnung (302) eines Identifikators (IDE) eines Senders eines Inhaltselements (208-212) zu wenigstens einer Klasse durch Suche und Auswertung der vorab durch diesen Sender gesendeten Inhalte umfasst.

8. Verfahren nach einem der vorhergehenden Ansprüche, **dadurch gekennzeichnet, dass** ein Identifikator (IDE; IDU) einen Benutzernamen, eine IP-Nummer oder eine E-Mail-Adresse darstellt.

9. Anwendung des Verfahrens nach einem der vorhergehenden Ansprüche auf die Zugriffskontrolle auf Inhalte von einem geschäftlichen Netzwerk aus.

10. Datenverarbeitungssystem (200) zur Kontrolle des Zugriffs auf Inhalte (208-212) über das Internet (116), von einem sogenannten LAN (102) aus, wobei das System (200) folgende Schritte umfasst:
- Einrichtungen (202) zur Festlegung einer Identifizierungsdata (IDE), des sogenannten Identifikators, eines Senders eines Inhaltselements (208-212) einer Seite (120) durch Auswertung einer Zugriffsanfrage auf besagte Seite (120) und/oder von Anzeigedaten besagter Seite,
- Einrichtungen (214) zum Abgleich des besagten Identifikators (IDE) des besagten Senders mit wenigstens einem vorbestimmten Identifikatorenverzeichnis (118),
- Einrichtungen zur Anzeige oder nicht des besagten Inhaltselements entsprechend dem besagten Abgleich.

## Claims

1. A method for processing data to control access to content (208-212) via the internet (116), from a so-called local network (102), said method comprising the following steps:
- receiving a request for access to a page (120) comprising at least one content element (208-212), and
- for at least one content element (208-212) of said page (120), the following steps:
o determining (310) identification data (IDE), called identifier, of a transmitter of said content element (208-212), by analyzing said request and/or display data of said page loaded in response to said request,
o determining (314) categorization data, called category, of the transmitter of the content element (208-212) by comparison of said identifier of the transmitter of the content element (208-212) with at least one list of identifiers (216), and
o as a function of said category, displaying said page (120) with or without said content element (208-212).

2. The method according to claim 1, **characterized in that** it also comprises a step of determining (318) authorization data by comparison of the category of the transmitter of the content element (208-212) with at least one list (218) of authorized and/or prohibited categories of identifiers of transmitters of content elements.

3. The method according to any one of the previous claims, **characterized in that** it comprises determining (306) an item of identification data (IDU), called identifier, of a user wishing to access the page (120) comprising the content element (208-212).

4. The method according to claim 3, **characterized in that** it comprises determining (306) a profile (PRU) associated with the user as a function of the user's identifier (IDU).

5. The method according to claims 2 and 4, **characterized in that** the list (218) of authorized/prohibited categories of identifiers depends of a predetermined user profile (PRU).

6. The method according to any one of the previous claims, **characterized in that** it comprises determining (302) a list (216) of identifiers of transmitters of content elements (208-212), said list (216) linking at least one identifier (IDE) of a transmitter of a content element to at least one category of identifiers.

7. The method according to claim 6, **characterized in that** it comprises classifying (302) an identifier (IDE) of a transmitter of a content element (208-212) into at least one category, by searching for and analyzing content previously transmitted by this transmitter.

8. The method according to any one of the previous claims, **characterized in that** an identifier (IDE, IDU) represents a user name, an IP number, or an e-mail address.

9. A use of the method according to any one of the previous claims to control access to content from a professional network.

10. A system (200) for processing data to control access to content (208-212) via the internet (116), from a so-called local network (102), said system (200) comprising:
- means (202) for determining an item of identification data (IDE), called identifier, of a transmitter of a content element (208-212) of a page (120) by analyzing a request for access to said page (120) and/or display data of said page,
- means (214) for comparing said identifier (IDE) of said transmitter with at least one predetermined list (118) of identifiers,
- means for displaying or not displaying said content element as a function of said comparison.
